# FASCICULE DE BREVET EUROPEEN

(11) **EP 1 281 878 B1**
(45) Date de publication et mention de la délivrance du brevet: **12.10.2005**
(21) Numéro de dépôt: 02291615.9
(22) Date de dépôt: 28.06.2002
(51) Int. Cl.: F16C 11/02, F16B 21/12

(54) **Axe de liaison pivot entre deux pièces**
Gelenkzapfen zwischen zwei Teilen
Pivot pin between two elements

(30) Priorité: 02.08.2001 FR 0110383
(43) Date de publication de la demande: 05.02.2003
(73) Titulaire: Peugeot Citroen Automobiles, 92200 Neuilly Sur Seine (FR)
(72) Inventeur: Briard, Jean Luc, 95120 Ermont (FR)
(74) Mandataire: De Cuenca, Emmanuel Jaime

(56) Documents cités:
- DE-A- 4 010 466
- FR-A- 2 762 651
- FR-A- 2 773 595
- FR-E- 52 040
- US-A- 4 086 014

## Description

La présente invention concerne un axe de liaison pivot entre deux pièces, comprenant un pion adapté pour traverser au moins un trou pratiqué dans chaque pièce et un verrou adapté pour entourer le pion et comprenant des moyens pour bloquer l'axe en translation disposés à chacune de ses extrémités et des moyens de retenue du pion dans le verrou.

Elle concerne plus particulièrement un axe de liaison pivot d'une pédale de frein qui doit être liée avec l'extrémité d'une tige d'amplificateur de freinage d'un véhicule automobile, ladite extrémité étant en forme de chape.

Pour réaliser une telle liaison, on a déjà proposé un axe en deux parties dont une est constituée d'un pion qui vient traverser le ou les trou(s) pratiqué(s) dans chaque pièce à assembler et l'autre est constituée d'un verrou qui vient entourer le pion et qui comprend d'une part des moyens pour bloquer l'axe en translation disposés à chacune de ses extrémités et d'autre part des moyens pour retenir le pion dans le verrou.

Ainsi le document FR 2 773 595 propose un axe logé dans un manchon fendu dans lequel est découpée une pluralité de pattes flexibles orthogonales et de languettes qui d'une part retiennent l'axe dans le manchon et d'autre part assurent la fixation du manchon sur les branches de la chape de la tige de l'amplificateur de freinage.

Le montage de l'axe entouré de son manchon s'avère en pratique délicat à réaliser et le temps de montage qui y est consacré est assez long. En outre, ce montage n'est pas nécessairement très fiable car la pédale de frein est directement en contact avec le manchon lors du pivotement, ce qui augmente considérablement les contraintes mécaniques ede l'axe et donc l'usure du manchon.

Le document DE 40 10 466 divulgue également un pion logé dans un manchon qui le maintient par l'intermédiaire d'une partie rétrécie de son corps insérée dans une gorge transversale circulaire du pion, le manchon faisant office de palier autour duquel la pédale de frein pivote.

Si le montage de ce type d'axe de liaison est relativement aisé et rapide à réaliser, il n'est pas nécessairement très fiable car la pédale de frein est directement en contact avec le manchon lors du pivotement, ce qui augmente considérablement les contraintes mécaniques de l'axe et donc l'usure du manchon.

Le but de l'invention est alors de proposer un axe de liaison tel que cité en préambule dont le montage soit simple et rapide à réaliser et fiable.

Pour ce faire, l'invention a pour objet un axe de liaison pivot entre deux pièces, comprenant un pion adapté pour traverser au moins un trou pratiqué dans chaque pièce et un verrou adapté pour entourer le pion et comprenant des moyens pour bloquer l'axe en translation disposés à chacune de ses extrémités et des moyens de retenue du pion dans le verrou remarquable en ce que le pion comprend sensiblement sur toute sa longueur au moins deux rainures et en ce que le verrou comprend, en tant que moyens de blocage, une tête et des pieds susceptibles de s'écarter l'un de l'autre et, en tant que moyens de retenue, au moins deux bras de longueur sensiblement égale à et de section conjuguée à celle des rainures et reliant la tête aux pieds, lesdits bras étant adaptés pour coulisser dans les rainures et pour écarter les pieds.

Le montage d'un tel axe est très simple et rapide à réaliser puisque l'opérateur en charge du montage n'a pas à utiliser d'outil spécifique. En outre, un tel montage garantit la mise en place correcte du pion et de son verrou associé sans qu'il y ait de vérification supplémentaire à effectuer. Enfin, un tel montage est très fiable puisque le verrou selon l'invention ne subit pas les contraintes mécaniques fonctionnelles d'une liaison pivot classique car le verrou n'est pas au contact directement du trou ou de l'alésage de la pièce lors de son pivotement.

Avantageusement, le pion comprend sur l'une de ses faces latérales un téton adapté pour faciliter l'introduction de l'axe dans les trous des pièces placés en regard l'un de l'autre. Avantageusement encore, le pion est en matériau métallique.

Selon une caractéristique avantageuse, le verrou est une pièce monobloc.Selon un premier mode de réalisation de l'invention, le pion comprend une tête de section circulaire et trois rainures de section rectangulaire et le verrou comprend une tête de section circulaire adaptée pour venir s'appuyer contre celle du pion et trois bras de hauteur légèrement inférieure à celle de rainures.

L'axe selon ce mode de réalisation est très robuste.

Selon ce mode de réalisation, le pion comprend avantageusement des encoches pratiquées à l'extrémité opposée de la tête dans laquelle des doigts solidaires de la tête du verrou sont susceptibles de venir s'y introduire.

Ces encoches permettent de réaliser un bon prémaintien du verrou autour de l'axe avant la mise en place de l'ensemble dans les trous ou alésages des pièces à lier.

Selon ce même mode, l'axe comprend des encoches pratiquées sous la tête du pion et dans lesquelles les doigts solidaires de la tête du verrou sont également susceptibles de venir s'y introduire.

Selon un autre mode de réalisation,le pion comprend deux rainures et le verrou est constitué d'une tige métallique recourbée comprenant la tête en forme de W et deux pieds sous la forme de crochets.

Selon un autre mode encore de réalisation, le pion comprend deux rainures et le verrou comprend deux pieds de section longitudinale triangulaire et une tête élastique présentant quatre lobs disposés symétriquement par rapport à l'axe de rotation du pion et réunis entre eux par des pattes flexibles.

L'axe selon ces deux derniers modes est facile à réaliser et simple à mettre en place dans les trous ou alésages des pièces à assembler.

L'invention concerne également l'utilisation de l'axe qui vient d'être décrit pour réaliser une liaison pivot entre les deux branches d'une chape et une pièce disposée entre les deux branches.

Selon cette utilisation, la chape peut être l'extrémité d'une tige d'amplificateur de freinage et la pièce peut être une pédale de frein d'un véhicule automobile.

L'invention concerne enfin une pédale de frein d'un véhicule automobile liée à la tige d'amplificateur de freinage au moyen d'un axe de liaison tel que décrit précédemment.

D'autres avantages de l'invention seront mieux compris à la lecture de la description détaillée d'un exemple selon l'invention faite en référence aux figures suivantes qui représentent :
- figures 1a à 1c : une vue en perspective d'un axe de liaison selon un premier mode de réalisation de l'invention, respectivement avant son assemblage, avant et après sa mise en place dans les trous des pièces à lier;
- figures 2a à 2c : une représentation schématique des différentes étapes de réalisation de la liaison pivot au moyen de l'axe slon les figures 1a et 1b ;
- figures 3a et 3b : une vue en perspective d'un axe de liaison selon un deuxième mode de réalisation de l'invention, respectivement avant et après sa mise en place dans les trous des pièces à lier;
- figures 4a et 4b : une vue en perspective d'un axe de liaison selon un troisième mode de réalisation de l'invention, respectivement avant et après sa mise en place dans les trous des pièces à lier ;
- figure 5 : une vue en perspective d'une pédale de frein liée à rotation à la tige d'un amplificateur de freinage d'un véhicule automobile.

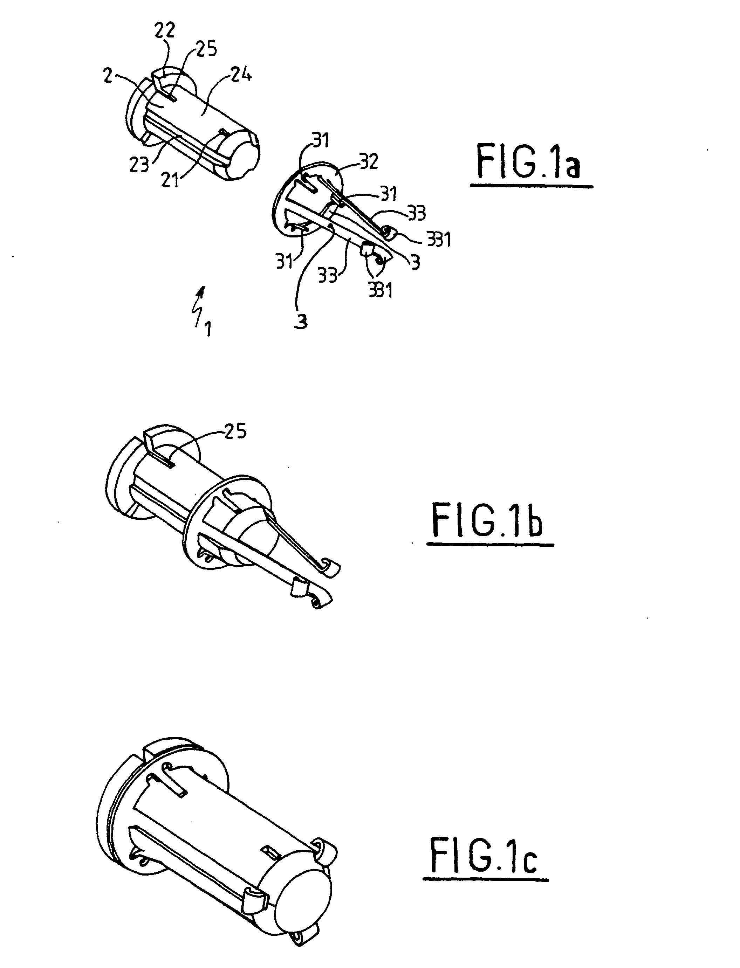

Sur la figure 1a on a représenté un axe de liaison pivot selon un premier mode de réalisation de l'invention. Cet axe 1 est constitué d'un pion 2 métallique de forme générale cylindrique et d'un verrou 3 monobloc en matière plastique qui sont fabriqués indépendamment l'un de l'autre avant leur assemblage et sont maintenus entre eux avant le montage (figure 1b) dans les trous des pièces à lier. Ce maintien est assuré par l'intermédiaire de trois doigts 31 angulairement répartis uniformément sur la partie inférieure de la tête 32 de section circulaire et qui sont introduites individuellement dans une encoche 21 pratiquée dans le pion 2 à l'extrémité opposée de la tête 22 du pion.

Ce maintien de l'axe selon l'invention avant le montage dans les trous des pièces à lier facilite sa manipulation par l'opérateur qui doit effectuer le montage. Le temps de montage est également plus rapide, ce qui peut être avantageux lorsque l'assemblage des deux pièces entre elles, par exemple entre la pédale de frein et la tige de l'amplificateur de freinage, doit être fait sur ligne industrielle.

Le pion 2 présente également trois rainures longitudinales 23 de section rectangulaire réparties uniformément autour du corps 24 du pion 2 et pratiquées sensiblement sur tout ela longueur du pion 2. Il présente également trois encoches 25 pratiquées immédiatement en dessous de la tête 22 et angulairement réparties uniformément. Ces encoches 25 permettent l'introduction des doigts 31 du verrou 3 lorsque la mise en place de l'ensemble de l'axe dans les trous des pièces à lier est réalisée.

Le verrou 3 comprend également trois bras 33 reliant la tête 32 du verrou 3 aux pieds 34 qui sont venus de moulage avec l'ensemble du verrou et qui sont recourbés vers la tête 32 du verrou en formant une boucle. Ces bras 33 ont une hauteur sensiblement inférieure à celle des bras 33 de sorte qu'ils ne font pas saillie en dehors des rainures 23 après le montage de l'ensemble dans les trous des pièces à lier et donc lorsque la tête 32 du verrou est en contact avec celle du pion 2 (figure 1c) .

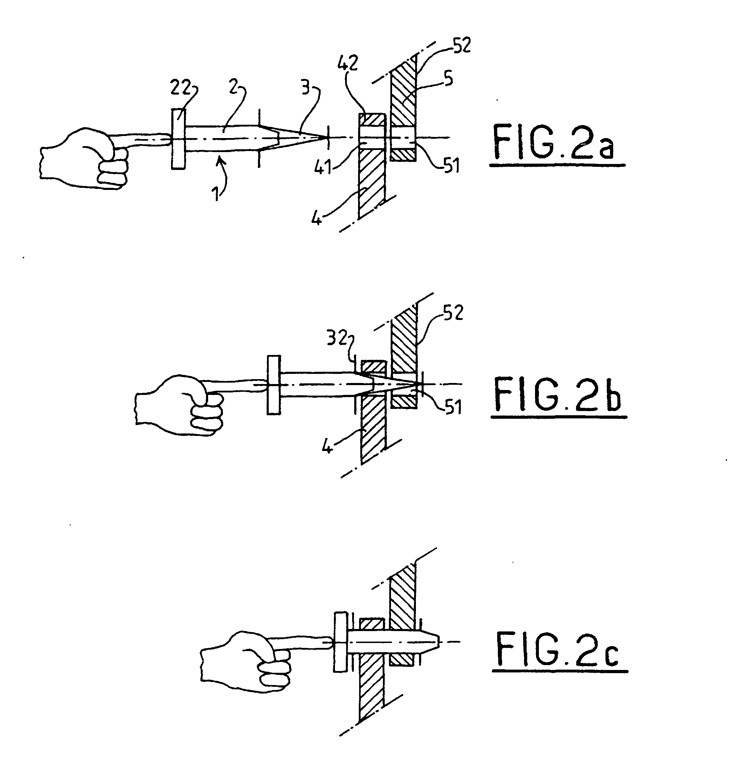

Les différentes étapes du montage de l'axe selon l'invention qui vient d'être décrit dans les trous des pièces à lier sont représentées schématiquement aux figures 2a à 2c.

Sur la figure 2a, on voit que l'opérateur en charge du montage vient mettre en regard de l' alésage 41 d'une des deux pièces 4 à assembler l'axe 1 selon l'invention précédemment décrit, le verrou 3 étant préalablement maintenu au pion 2 au moyen des encoches 31 (figure 1a).

L'introduction du verrou 3 dans les deux alésages 41,51 en regard l'un de l'autre est réalisée jusqu'à ce que la tête 32 du verrou vienne en appui contre la face extérieure 42 de la première pièce 2 à lier.

L'opérateur continue alors à appuyer sur la tête 22 du pion 2, ce qui provoque l'écartement des bras 33 du verrou 3 et leur coulissement dans les rainures correspondantes 23 du pion 2.

Le montage est achevé lorsque l'écartement entre les bras 33 a atteint la valeur du diamètre du pion 2 et que la tête 32 du verrou vient en appui contre celle 22 du pion 2, les doigts 31 étant introduits dans les encoches 25. Les pieds 331 du verrou font alors saillie vers l'extérieur de l'axe 1 et sont susceptibles de bloquer en translation l'axe selon l'invention et donc de maintenir celui-ci introduit de manière permanente dans les alésages 41,51 des deux pièces à assembler entre elles.

Les deux pièces 4,5 sont ainsi maintenues entre elles et peuvent pivoter l'une par rapport à l'autre autour de l'axe 1 selon l'invention.

L'axe 1 réalisé selon le mode qui vient d'être décrit est très robuste.

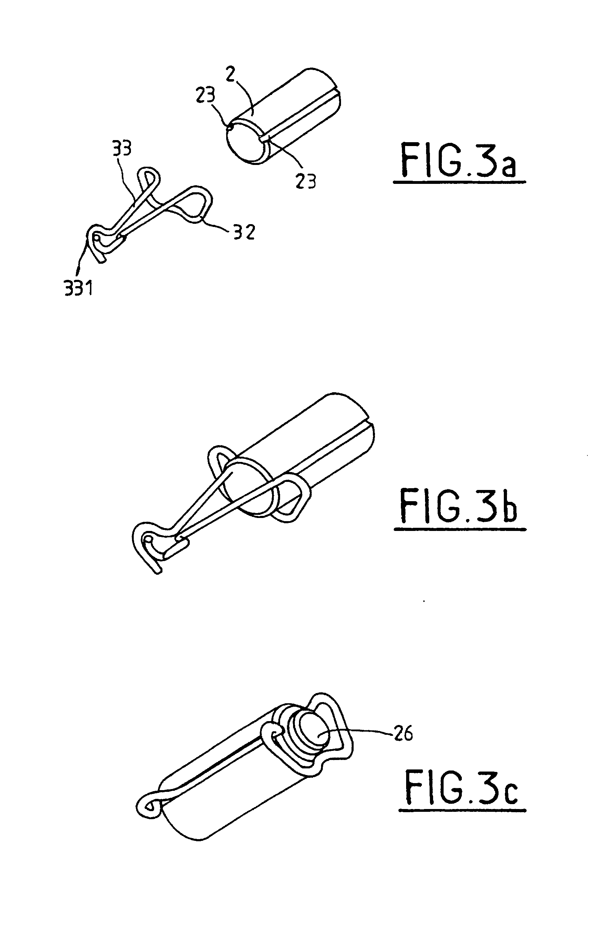

Sur les figures 3a à 3c, on a représenté un deuxième mode de réalisation de l'axe 1 conforme à l'invention respectivement avant l'assemblage entre les deux parties de l'axe, avant leur introduction dans les trous des pièces à assembler et une fois le montage réalisé. Selon ce mode, le pion cylindrique 2 comprend deux rainures longitudinales 23 de section semi-circulaire pratiquées sensiblement sur toute la longueur du pion 2 et diamétralement opposées. Le pion comprend également un téton 26 ménagé sur l'une de ses faces latérales. Ce téton 26 facilite l'introduction du pion 2 dans le verrou 3 associé et dans les trous des pièces à assembler entre elles.

Selon ce mode également, le verrou 3 conforme à l'invention est une tige métallique de section circulaire pliée sur elle-même et dont les deux branches constituent des bras 33 reliant les pieds 331 en forme de crochet à une tête 32 en forme de W.

L'axe 1 réalisé selon ce mode est très facile à fabriquer et également à mettre en place dans les trous des pièces à assembler.

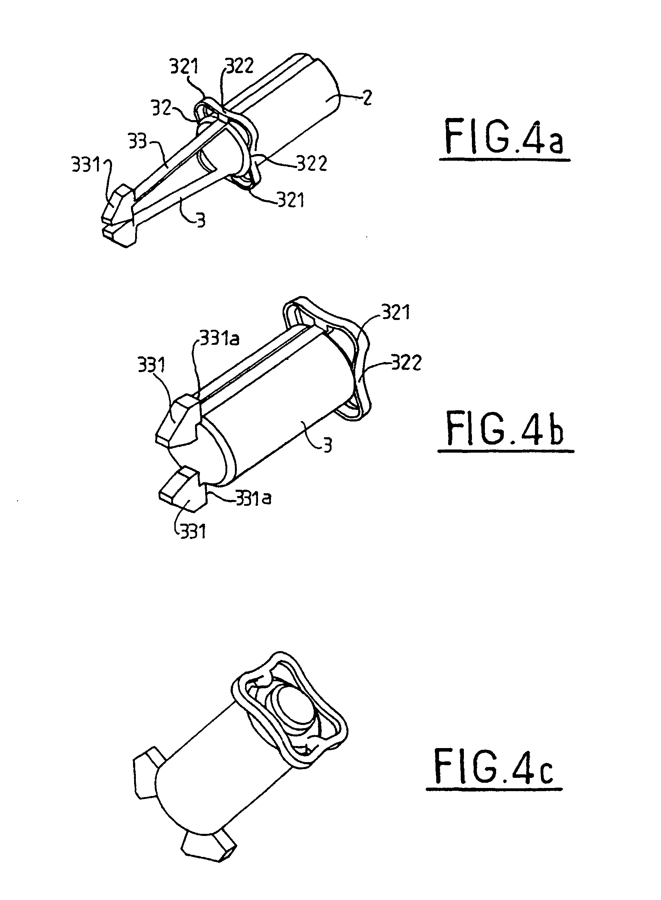

Sur les figures 4a à 4c, on a représenté un troisième mode de réalisation de l'axe 1 conforme à l'invention respectivement avant l'assemblage entre les deux parties de l'axe, avant leur introduction dans les trous des pièces à assembler et une fois le montage réalisé. Selon ce mode, le pion 2 est identique avec celui du deuxième mode à ceci près que la section des rainures 23 est rectangulaire. Le verrou 3 est une pièce en matière plastique monobloc dont les bras 33 relient les pieds 331 de section longitudinale triangulaire à la tête 32 présentant quatre lobs 321 identiques disposés symétriquement par rapport à l'axe de rotation du pion et réunis entre eux par des pattes élastiques 322 dont le rapprochement et l'écartement permet d'exercer un effort sur le pion avant la mise en place de l'axe 1 dans les trous des pièces à assembler, ce qui permet un meilleur maintien du pion 2 dans le verrou 3.

Selon ce mode, la partie intérieure des pieds 331a constitue des butées venant bloquer en translation l'axe selon l'invention contre la face extérieure de la pièce à assembler.

L'axe 1 réalisé selon ce troisième mode est également très facile à fabriquer et à mettre en place dans les trous des pièces à assembler.

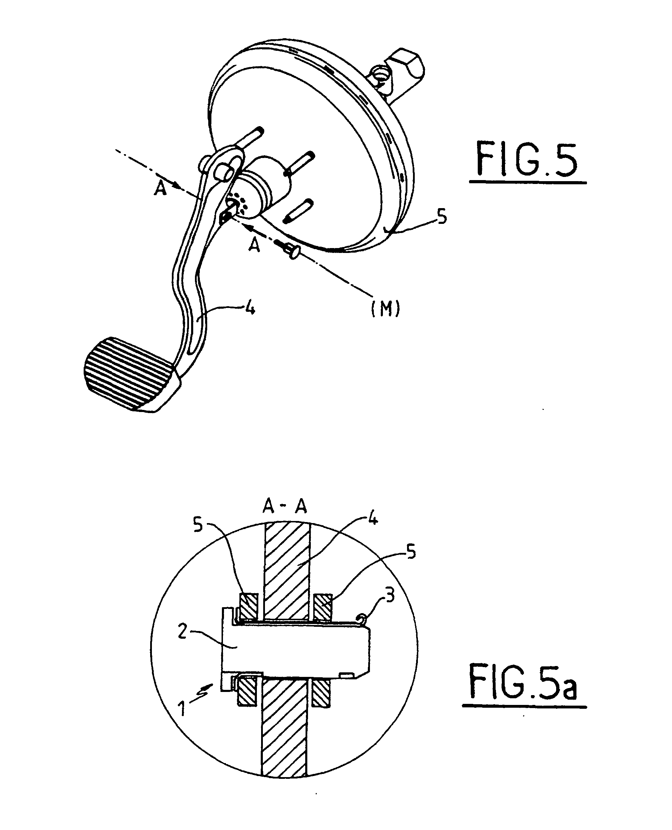

Sur la figure 5 on a représenté une pédale de frein 4 liée à rotation avec une tige 5 d'amplificateur de freinage au moyen de l'axe selon l'invention, l'ensemble ainsi constitué étant implanté dans un véhicule automobile. Plus précisément la vue agrandie en coupe transversale selon la figure 5a montre les deux branches 51,52 de la chape constituant l'extrémité de la tige d'amplificateur de freinage enserrant la pédale de frein 4, l'ensemble étant assemblé au moyen de l'axe 1 selon l'invention.

L'invention qui vient d'être décrite propose donc une solution de montage garantissant un positionnement efficace de la liaison pivot entre deux pièces. En outre, l'invention propose une liaison pivot très fiable car elle permet d'éviter l'usure prématurée du verrou 3. En effet, celui-ci ne subit pas de contrainte mécanique fonctionnelle que subit un verrou d'une liaison pivot classique, car aucune de ses parties n'est en contact direct avec l'alésage d'une ou des pièces à assembler.

Bien entendu il va de soi que d'autres modifications et améliorations peuvent être apportées sans pour autant sortir du cadre de l'invention. Ainsi, le matériau constitutif et les dimensions du verrou peuvent être facilement adaptés en fonction des contraintes de fabrication et de la nature et des dimensions des pièces à assembler.

## Revendications

1. Axe de liaison pivot (1) entre deux pièces (4,5), comprenant un pion (2) adapté pour traverser au moins un trou (41,51) pratiqué dans chaque pièce et un verrou (3) adapté pour entourer le pion et comprenant des moyens (32,331) pour bloquer l'axe en translation disposés à chacune de ses extrémités et des moyens (33) de retenue du pion dans le verrou **caractérisé en ce que** le pion comprend sensiblement sur toute sa longueur au moins deux rainures (23) et **en ce que** le verrou comprend, en tant que moyens de blocage, une tête (32) et des pieds (331) susceptibles de s'écarter l'un de l'autre et, en tant que moyens de retenue, au moins deux bras (33) de longueur sensiblement égale à et de section conjuguée à celle des rainures et reliant la tête aux pieds, lesdits bras étant adaptés pour coulisser dans les rainures et pour écarter les pieds.

2. Axe de liaison selon la revendication 1, **caractérisé en ce que** le pion comprend sur l'une de ses faces latérales un téton (26) adapté pour faciliter l'introduction de l'axe dans les trous des pièces placés en regard l'un de l'autre.

3. Axe de liaison selon la revendication 1 ou 2, **caractérisé en ce que** le pion est en matériau métallique.

4. Axe de liaison selon l'une des revendications précédentes, **caractérisé en ce que** le verrou est une pièce monobloc.

5. Axe de liaison selon l'une des revendications précédentes, **caractérisé en ce que** le pion comprend une tête (22) de section circulaire et trois rainures (23) de section rectangulaire et **en ce que** le verrou comprend une tête (32) de section circulaire adaptée pour venir s'appuyer contre celle du pion et trois bras (33) de hauteur légèrement inférieure à celle de rainures.

6. Axe de liaison selon la revendication 5, **caractérisé en ce que** le pion comprend des encoches (21) pratiquées à l'extrémité opposée de la tête dans laquelle des doigts (31) solidaires de la tête du verrou sont susceptibles de venir s'y introduire.

7. Axe de liaison selon la revendication 6, **caractérisé en ce qu'** il comprend des encoches (25) pratiquées sous la tête du pion et dans lesquelles les doigts solidaires de la tête du verrou sont également susceptibles de venir s'y introduire.

8. Axe de liaison selon l'une des revendications 1 à 4, **caractérisé en ce que** le pion comprend deux rainures et **en ce que** le verrou est constitué d'une tige métallique recourbée comprenant la tête en forme de W et deux pieds sous la forme de crochets.

9. Axe de liaison selon l'une des revendications 1 à 4, **caractérisé en ce que** le pion comprend deux rainures et **en ce que** le verrou comprend deux pieds de section longitudinale triangulaire et une tête élastique présentant quatre lobs disposés symétriquement par rapport à l'axe de rotation du pion et réunis entre eux par des pattes flexibles.

10. Utilisation de l'axe selon l'une quelconque des revendications précédentes pour réaliser une liaison pivot entre les deux branches d'une chape et une pièce disposée entre les deux branches.

11. Utilisation selon la revendication 10, **caractérisée en ce que** la chape est l'extrémité d'une tige d'amplificateur de freinage et la pièce est une pédale de frein d'un véhicule automobile.

12. Pédale de frein (4) d'un véhicule automobile, **caractérisée en ce qu'**elle est liée à la tige (5) d'amplificateur de freinage au moyen d'un axe de liaison (1) selon l'une quelconque des revendications précédentes.

## Patentansprüche

1. Schwenkbolzen (1) zwischen zwei Teilen (4, 5), mit einem Körper (2), der mindestens ein Loch (41, 51) in jedem der Teile durchdringen kann, und mit einem Riegel (3), der den Körper umgeben kann und an seinen Enden Mittel (32, 331) zum Blockieren des Bolzens in Translation sowie Mittel (33) zum Halten des Körpers im Riegel aufweist, **dadurch gekennzeichnet, dass** der Körper im Wesentlichen über seine gesamte Länge mindestens zwei Nuten (23) aufweist und **dadurch**, **dass** der Riegel als Blockiermittel einen Kopf (32) und Füße (331) aufweist, die sich auseinander spreizen können, und als Haltemittel mindestens zwei im Wesentlichen gleich lange Arme (33), deren Querschnitt auf denjenigen der Nuten abgestimmt ist und die den Kopf mit den Füßen verbinden, wobei die Arme in den Nuten gleiten und die Füße spreizen können.

2. Bolzen nach Anspruch 1, **dadurch gekennzeichnet, dass** der Körper an einer seiner Seitenflächen einen Ansatz (26) aufweist, der das Einführen des Bolzens in die Löcher der einander gegenüber liegenden Teile erleichtert.

3. Bolzen nach Anspruch 1 oder 2, **dadurch gekennzeichnet, dass** der Körper aus Metall ist.

4. Bolzen nach einem der vorhergehenden Ansprüche, **dadurch gekennzeichnet, dass** der Riegel (3) aus einem Stück ist.

5. Bolzen nach einem der vorhergehenden Ansprüche, **dadurch gekennzeichnet, dass** der Körper einen Kopf (22) von kreisförmigem Querschnitt und drei Nuten (23) von rechteckigem Querschnitt aufweist und **dadurch**, **dass** der Riegel einen Kopf (32) von kreisförmigem Querschnitt, der am Kopf des Körpers zur Anlage kommen kann, und drei Arme (33) aufweist, die etwas niedriger sind als die Nuten.

6. Bolzen nach Anspruch 5, **dadurch gekennzeichnet, dass** der Körper an dem Ende, das dem Kopf gegenüberliegt, Kerben (21) aufweist, in die sich die mit dem Kopf des Riegels fest verbundenen Finger (31) einfügen können.

7. Bolzen nach Anspruch 6, **dadurch gekennzeichnet, dass** er unter dem Kopf des Körpers Kerben (25) aufweist, in die sich die mit dem Kopf des Riegels fest verbundenen Finger ebenfalls einfügen können.

8. Bolzen nach einem der Ansprüche 1 bis 4, **dadurch gekennzeichnet, dass** der Körper zwei Nuten aufweist und **dadurch**, **dass** der Riegel aus einer gebogenen Metallstange mit dem Kopf in Form eines W und zwei Füßen in Hakenform gebildet ist.

9. Bolzen nach einem der Ansprüche 1 bis 4, **dadurch gekennzeichnet, dass** der Körper zwei Nuten aufweist und **dadurch**, dass der Riegel zwei Füße von dreieckigem Längsschnitt und einen elastischen Kopf mit vier Zipfeln aufweist, die gegenüber der Rotationsachse des Körpers symmetrisch angeordnet und durch flexible Teile miteinander verbunden sind.

10. Verwendung des Bolzens nach einem der vorhergehenden Ansprüche, um eine Schwenkverbindung zwischen den beiden Zweigen einer Gabel herzustellen, und ein Teil zwischen diesen beiden Zweigen.

11. Verwendung nach Anspruch 10, **dadurch gekennzeichnet, dass** die Gabel das Ende einer Bremskraftverstärkerstange und das Teil das Bremspedal eines Kraftfahrzeugs ist.

12. Bremspedal (4) eines Kraftfahrzeugs, **dadurch gekennzeichnet, dass** es mit der Bremsverstärkerstange (5) durch einen Bolzen (1) nach einem der vorhergehenden Ansprüche verbunden ist.

## Claims

1. Pivot-type connecting shaft (1) between two parts (4, 5), comprising a pin (2) adapted to pass through at least one hole (41, 51) made in each part and a bolt (3) adapted to surround the pin and comprising means (32, 331) for locking the shaft in translation arranged at each of its ends and means (33) for holding the pin in the bolt **characterised in that** the pin comprises over substantially its whole length at least two grooves (23) and **in that** the bolt comprises, as locking means, a head (32) and feet (331) capable of moving away from one another and, as holding means, at least two arms (33) substantially equal in length to and with a section conjugate to that of the grooves and connecting the head to the feet, said arms being adapted to slide inside the grooves and to move the feet apart.

2. Connecting shaft according to Claim 1, **characterised in that** the pin comprises, on one of its side faces, a nipple (26) adapted to facilitate the introduction of the shaft into the holes of the parts placed facing one another.

3. Connecting shaft according to Claim 1 or 2, **characterised in that** the pin is made of a metallic material.

4. Connecting shaft according to one of the preceding claims, **characterised in that** the bolt is a single-piece part.

5. Connecting shaft according to one of the preceding claims, **characterised in that** the pin comprises a head (22) of circular section and three grooves (23) of rectangular section and **in that** the bolt comprises a head (32) of circular section adapted to bear against that of the pin and three arms (33) of a height slightly less than that of the grooves.

6. Connecting shaft according to Claim 5, **characterised in that** the pin comprises notches (21) made at the opposite end of the head into which fingers (31) integral with the head of the bolt are capable of being introduced.

7. Connecting shaft according to Claim 6, **characterised in that** it comprises notches (25) made under the head of the pin and into which the fingers integral with the head of the bolt are also capable of being introduced.

8. Connecting shaft according to one of Claims 1 to 4, **characterised in that** the pin comprises two grooves and **in that** the bolt is constituted by a curved metal rod comprising the W-shaped head and two hook-shaped feet.

9. Connecting shaft according to one of Claims 1 to 4, **characterised in that** the pin comprises two grooves and **in that** the bolt comprises two feet of triangular longitudinal section and a resilient head having four lobes arranged symmetrically with respect to the axis of rotation of the pin and joined together by flexible feet.

10. Use of the shaft according to any one of the preceding claims in order to produce a pivot-type connection between the two branches of a fork joint and a part arranged between the two branches.

11. Use according to Claim 10, **characterised in that** the fork joint is the end of a braking amplifier rod and the part is a brake pedal of a motor vehicle.

12. Brake pedal (4) of a motor vehicle **characterised in that** it is linked to the braking amplifier rod (5) by means of a connecting shaft (1) according to any one of the preceding claims.
